(19) Europäisches Patentamt
European Patent Office
Office européen des brevets

(11) **EP 3 219 005 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(21) Anmeldenummer: **15766477.2**

(22) Anmeldetag: **18.09.2015**

(51) Int Cl.:
*H02M 7/5395* (2006.01)   *H02P 27/08* (2006.01)

(86) Internationale Anmeldenummer:
**PCT/EP2015/071453**

(87) Internationale Veröffentlichungsnummer:
**WO 2016/074835 (19.05.2016 Gazette 2016/20)**

(54) **STROMRICHTER UND VERFAHREN ZUM BETREIBEN EINES STROMRICHTERS**

POWER CONVERTER AND METHOD FOR OPERATING A POWER CONVERTER

CONVERTISSEUR DE PUISSANCE ET PROCÉDÉ DE FONCTIONNEMENT D'UN CONVERTISSEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2014 DE 102014223236**

(43) Veröffentlichungstag der Anmeldung:
**20.09.2017 Patentblatt 2017/38**

(73) Patentinhaber: **Robert Bosch GmbH**
**70442 Stuttgart (DE)**

(72) Erfinder:
• **KUEHNER, Jochen**
**71522 Backnang (DE)**
• **DAMSON, Mark**
**70499 Stuttgart (DE)**
• **GOETTING, Gunther**
**70499 Stuttgart (DE)**
• **RAICHLE, Daniel**
**71665 Vaihingen (DE)**
• **HINDORF, Kay**
**71638 Ludwigsburg (DE)**
• **WIECHA, Thomas**
**71679 Asperg (DE)**

(56) Entgegenhaltungen:
EP-A1- 2 568 560       CN-A- 101 252 336
DE-A1- 10 201 705      DE-A1- 10 249 568
DE-A1-102005 035 770   JP-A- H01 303 070
JP-A- 2001 037 242     JP-A- 2012 143 075
US-A1- 2009 057 832

## Beschreibung

Die vorliegende Erfindung betrifft einen Stromrichter und ein Verfahren zum Betreiben eines Stromrichters.

Stand der Technik

Die Druckschrift JP 2001-037242 A offenbart einen Überstromschutz für einen Wechselrichter. Vor dem Start des Wechselrichterbetriebs wird an einer Last eine Spannung angelegt und ein Strom ermittelt, der sich an der Last eingestellt.

Die Druckschrift EP 2 568 560 A1 betrifft das Erkennen und Blockieren eines Fehlersstroms in einem Frequenzumrichter.

Die Druckschrift JP 2012-143075 A offenbart einen Überstromschutz für Spannungswandler. Dabei erfolgt eine Abschaltung, wenn große Ströme von dem Spannungswandler in Richtung einer Last, wie zum Beispiel einem Transformator oder einem Elektromotor, fließen.

Die Druckschrift CN 101 252 336 A betrifft eine permanent erregte Synchronmaschine. Wenn eine Fehlfunktion detektiert worden ist, erfolgt eine vollständige Unterbindung von Ansteuersignalen und eine Unterbrechung eines Steuerprogramms.

Die Druckschrift US 2009057832 offenbart ein Halbleitermodul mit einer Signaleinrichtung, welche in Abhängigkeit eines erfassten Stromflusses durch die Diode die Ansteuerung des Halbleiterschalters verhindert.

Die Druckschrift DE 102 01 705 A1 offenbart eine elektrische Servolenkungsvorrichtung mit redundanten Recheneinheiten zur Erhöhung der Zuverlässigkeit der Vorrichtung.

Die Druckschrift DE 102 49 568 A1 offenbart eine verbessertes Fehleranalyseverfahren einer Wechselrichter-Schaltung.

Die Druckschrift DE 10 2005 035770 A1 offenbart eine Steuerung für eine Servolenkungsvorrichtung.

Die Deutsche Patentanmeldung DE 10 2009 047 616 A1 offenbart eine Wechselrichteranordnung zum Betreiben eines Elektromotors. Der Elektromotor wird dabei über eine B6-Brücke angesteuert.

In elektrischen Antrieben werden häufig Stromrichter eingesetzt. Diese Stromrichter wandeln eine Gleichspannung, beispielsweise von einer Batterie, in eine zur Ansteuerung einer elektrischen Maschine geeignete Wechselspannung. In der Regel umfassen solche Stromrichter für jede Phase der elektrischen Maschine eine Halbbrücke. Eine solche Halbbrücke besteht dabei aus zwei Schaltelementen, vorzugsweise Halbleiterschalter, die jeweils durch eine parallel angeordnete Freilaufdiode ergänzt werden. Für Anwendungen mit hohen Spannungen, wie sie zum Beispiel bei Elektro- und Hybridfahrzeugen auftreten, werden als Halbleiterschalter in der Regel Bipolartransistoren mit einer isolierten Gateelektrode (IGBT) eingesetzt. Solche IGBT können dabei einen Strom nur in Durchlassrichtung führen.

Die Ansteuerung von solchen IGBT erfolgt in der Regel durch sogenannte Gate-Treiber und Booster. Der Energiebedarf dieser Baugruppen hängt dabei von der Anzahl von Schaltvorgängen pro Zeiteinheit ab.

Es besteht daher ein Bedarf nach einem Stromrichter mit einem Verfahren zum Ansteuern eines Stromrichters mit reduziertem Leistungsbedarf.

Offenbarung der Erfindung

Die vorliegende Erfindung schafft einen Pulswechselrichter zum Bereitstellen einer pulsweitenmodulierten Ausgangsspannung an einem Phasenanschluss mit den Merkmalen des Patentanspruchs 1 und ein Verfahren zum Betreiben eines Pulswechselrichters mit den Merkmalen des Patentanspruchs 6.

Vorteile der Erfindung

Der vorliegenden Erfindung liegt die Idee zugrunde, einen Halbleiterschalter nur dann anzusteuern, wenn ein Strom in einem Strompfad mit einem Halbleiterschalter und einer parallel zu dem Halbleiterschalter angeordneten Freilaufdiode nicht ohnehin durch die Freilaufdiode fließt. Wird dagegen festgestellt, dass ein Strom auch durch eine parallel zu dem Halbleiterschalter angeordnete Freilaufdiode fließen kann, so erfolgt keine aktive Ansteuerung des Halbleiterschalters. Auf diese Weise kann die Anzahl der Ansteuervorgänge des Halbleiterschalters minimiert werden.

Unter dem Vorgang des Unterdrückens von Ansteuersignalen ist dabei zu verstehen, dass insbesondere zunächst eine konventionelle Generierung / Berechnung von Ansteuersignalen erfolgt. Die so gewonnenen Ansteuersignale umfassen dabei auch eine Ansteuerung von Halbleiterschaltern des Pulswechselrichters, bei denen der Strom durch parallel zu den Halbleiterschaltern angeordnete Freilaufdioden fließt. Hierbei werden nun zur "Unterdrückung" der Ansteuersignale solche bereits generierten Ansteuersignale nicht an den Steueranschluss der Halbleiterschalter weitergegeben.

Zusätzlich oder alternativ kann unter einer erfindungsgemäßen Unterdrückung von Ansteuersignalen auch verstanden werden, dass bereits bei der Generierung der Ansteuersignale die Stromverläufe innerhalb des Pulswechselrichters berücksichtigt werden. Ergibt sich bei dieser Analyse der Stromverläufe, dass ein Strom durch eine Freilaufdiode fließt, so kann für eine Unterdrückung von Ansteuersignalen für Halbleiterschalter in diesem Fall auch bereits der Vorgang des Generierens/Berechnens der Ansteuersignale dies berücksichtigen. Das erfindungsgemäße Unterdrücken von Ansteuersignalen umfasst daher den Vorgang, bei dem Ansteuersignale, die nicht an einen Halbleiterschalter weitergegeben werden sollen erst gar nicht generiert werden.

Durch die Reduktion der Ansteuervorgänge des Halbleiterschalters sinkt auch die Leistungsaufnahme der Komponenten, die die Treibersignale an dem Steueranschluss des Halbleiterschalters bereitstellen. Auf diese Weise kann der Leistungsbedarf des Stromrichters gesenkt werden.

Darüber hinaus sinkt durch die verminderte Leistungsaufnahme der Komponenten zum Treiben des Halbleiterschalters auch die Verlustleistung und somit die thermische Energie, die während des Ansteuerns des Halbleiterschalters entsteht. Somit ist ein geringerer Aufwand für die Abfuhr der entstehenden Wärme erforderlich.

Weiterhin kann durch die Reduktion der Ansteuervorgänge des Halbleiterschalters, sowie durch die verringerte Verlustleistung auch die Lebensdauer der Komponenten des Stromrichters erhöht werden.

Gemäß einer Ausführungsform des Pulswechselrichters ist der Stromdetektor dazu ausgelegt, einen Strom durch die Diode, den Halbleiterschalter oder an dem Phasenanschluss zu erfassen.

Gemäß einer Ausführungsform unterdrückt die Steuervorrichtung das generierte Steuersignal an dem Steueranschluss des Halbleiterschalters, wenn ein Strom in einer vorbestimmten Richtung detektiert wird. Auf diese Weise kann eine besonders einfache Unterdrückung von Ansteuerimpulsen an dem Steueranschluss des Halbleiterschalters erreicht werden.

Gemäß einer Ausführungsform unterdrückt die Steuervorrichtung des Pulswechselrichters das generierte Steuersignal an dem Steueranschluss des Halbleiterschalters, wenn der Betrag des durch den Stromdetektor erfassten Stroms größer ist als ein vorbestimmter Schwellwert. Vorzugsweise kann der vorbestimmte Schwellwert einstellbar sein. Durch die Anpassung des Schwellwerts, kann gerade in Grenzfällen bei Strömen nahe dem Nulldurchgang noch ein sicherer und zuverlässiger Betrieb des Stromrichters erreicht werden.

Gemäß einer Ausführungsform ist die Steuervorrichtung ferner dazu ausgelegt, einen Stromverlauf in dem Pulswechselrichter zu berechnen, und die generierten Steuersignale in Abhängigkeit von dem berechneten Stromverlauf an dem Steueranschluss des Halbleiterschalters bereitzustellen. Der berechnete Stromverlauf kann dabei insbesondere unter Verwendung von zuvor detektierten Strömen berechnet werden. Auf diese Weise ist es möglich, den Strom im Voraus abzuschätzen. Somit kann eine effiziente Unterdrückung von Ansteuersignalen an dem Steueranschluss des Halbleiterschalters erreicht werden, ohne dass hierzu ein zusätzlicher Schaltungsaufwand erforderlich ist.

Gemäß einer Ausführungsform ist der Halbleiterschalter ein bipolarer Transistor mit einer isolierten Gateelektrode (IGBT).

Gemäß einer Ausführungsform umfasst der Pulswechselrichter eine Halbbrücke, die einen ersten Halbleiterschalter, eine erste Diode, einen zweiten Halbleiterschalter und eine zweite Diode umfasst. Der erste Halbleiterschalter ist zwischen dem positiven Potenzial einer Versorgungsspannung und einem Knotenpunkt angeordnet, der zweite Halbleiterschalter ist zwischen dem Knotenpunkt und dem negativen Potenzial der Versorgungsspannung angeordnet, die erste Diode ist zwischen dem positiven Potenzial der Versorgungsspannung und dem Knotenpunkt angeordnet und die zweite Diode ist zwischen dem Knotenpunkt und dem negativen Potenzial der Versorgungsspannung angeordnet. Der Phasenanschluss ist mit dem Knotenpunkt verbunden.

Gemäß einer Ausführungsform unterdrückt der Schritt zum Unterdrücken des generierten Steuersignals an dem Steueranschluss des Halbleiterschalters das Steuersignal, wenn in dem Schritt zum Detektieren eines Stroms innerhalb des Pulswechselrichters ein Strom in einer vorbestimmten Richtung detektiert worden ist.

Gemäß einer weiteren Ausführungsform stellt der Schritt zum Unterdrücken des generierten Steuersignals das Steuersignal an dem Steueranschluss des Halbleiterschalters nur dann bereit, wenn der Betrag des detektierten Stroms kleiner ist als ein vorbestimmter Schwellwert.

Gemäß einer weiteren Ausführungsform umfasst das Verfahren ferner einen Schritt zum Berechnen eines sich an dem Pulswechselrichter einstellenden Stromverlaufs , wobei der Schritt zum Berechnen des sich einstellenden Stromverlaufs den Stromverlauf unter Verwendung des detektierten Stroms berechnet, und wobei der Schritt zum Unterdrücken des generierten Steuersignals an dem Steueranschluss des Halbleiterschalters das Steuersignal unter Verwendung des berechneten Stromverlaufs unterdrückt.

Gemäß einer weiteren Ausführungsform berechnet der Schritt zum Berechnen des sich einstellenden Stromverlaufs den Stromverlauf unter Verwendung einer Clarke-Transformation.

Weitere Ausführungsformen und Vorteile der vorliegenden Erfindung ergeben sich aus der nachfolgenden Beschreibung unter Bezug auf die beigefügten Zeichnungen.

Kurze Beschreibung der Zeichnungen

Dabei zeigen:

Figur 1: eine schematische Darstellung eines Pulswechselrichters gemäß einer Ausführungsform;

Figur 2: eine schematische Darstellung einer Halbbrücke eines Pulswechselrichters gemäß einer Ausführungsform;

Figur 3: eine schematische Darstellung eines Pulswechselrichters gemäß einer weiteren Ausführungsform;

Figur 4: Diagramm zur Veranschaulichung der zeitlichen Abläufe, wie sie einem Pulswechselrichter gemäß einer Ausführungsform zugrunde liegen;

Figur 5: ein Diagramm zur Vorzeichenbestimmung von Phasenströmen, wie sie einem dreiphasigen Pulswechselrichter gemäß noch einer weiteren Ausführungsform zugrunde liegt; und

Figur 6: eine schematische Darstellung eines Ablaufdiagramms, wie es einem Verfahren zum Betreiben eines Pulswechselrichters gemäß einer Ausführungsform zugrunde liegt.

Beschreibung von Ausführungsformen

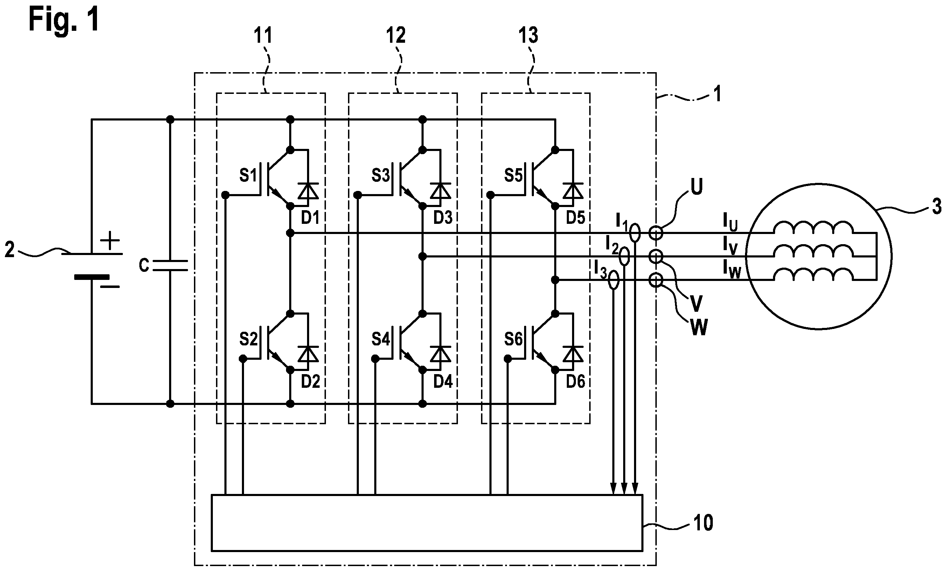

Figur 1 zeigt eine schematische Darstellung eines Pulswechselrichters 1. Der Pulswechselrichter 1 wird von einer Batterie 2 oder einer anderen Spannungsquelle, insbesondere einer Gleichspannungsquelle, gespeist. Zur Stabilisierung der Eingangsspannung kann am Eingang des Pulswechselrichters 1 ein Zwischenkreiskondensator C angeordnet sein. Der Pulswechselrichter 1 konvertiert die Eingangsgleichspannung in eine Ausgangsspannung, die dazu geeignet ist, einen elektrischen Antrieb 3 anzusteuern. Vorzugsweise kann es sich bei dem elektrischen Antrieb 3 um einen elektrischen Motor mit einer oder mehreren Phasen handeln. Die hier dargestellte Anzahl von drei Phasen dient dabei lediglich dem besseren Verständnis und stellt keine Beschränkung der Erfindung dar. Vorzugsweise wird der elektrische Antrieb 3 dabei mit einer durch den Pulswechselrichter 1 generierten Wechselspannung angesteuert.

Der Pulswechselrichter 1 umfasst für jede Phase des elektrischen Antriebs 3 eine Halbbrücke 11, 12, 13. Jede dieser Halbbrücken 11, 12, 13 umfasst zwei Halbleiterschalter S1-S6. Der erste Halbleiterschalter S1 der ersten Halbbrücke 11 ist mit einem Anschluss mit dem positiven Potenzial der Eingangsspannung von der Batterie 2 elektrisch verbunden. Der andere Anschluss dieses Halbleiterschalters S1 ist mit einem Knotenpunkt verbunden. An diesem Knotenpunkt ist auch ein Anschluss des zweiten Halbleiterschalters S2 dieser Halbleiterbrücke 11 elektrisch angeschlossen. Der andere Anschluss dieses zweiten Halbleiterschalters S2 ist mit dem negativen Potenzial der Spannung der Batterie 2 elektrisch verbunden. Weiterhin ist der Knotenpunkt, an dem der erste Halbleiterschalter S1 und der zweite Halbleiterschalter S2 miteinander verbunden sind, mit einem Phasenanschluss U verbunden. Dieser Phasenanschluss U des Pulswechselrichters 1 ist mit dem entsprechenden Phasenanschluss des elektrischen Antriebs 3 elektrisch verbunden. Parallel zu dem ersten Halbleiterschalter S1 ist eine Freilaufdiode D1 zwischen den beiden Anschlüssen des Halbleiterschalters S1 angeordnet. Die Durchlassrichtung der Freilaufdiode D1 ist dabei entgegengesetzt zu der Durchlassrichtung des Halbleiterschalters S1. In gleicher Weise ist auch parallel zu dem zweiten Halbleiterschalter S2 eine zweite Freilaufdiode D2 mit entgegengesetzter Durchlassrichtung angeordnet. Weiterhin sind die Steueranschlüsse des ersten Halbleiterschalters S1 und des zweiten Halbleiterschalters S2 mit einer Steuervorrichtung 10 verbunden.

Die zweite Halbbrücke 12 und die dritte Halbbrücke 13 sind analog zu der oben beschriebenen ersten Halbbrücke 11 aufgebaut, wobei die Knotenpunkte, an denen die beiden Halbleiterschalter S3 und S4 bzw. S5 und S6 jeweils miteinander verbunden sind, mit den weiteren Phasenanschlüssen V, W verbunden sind. Auch diese Phasenanschlüsse V und W sind mit entsprechenden Phasenanschlüssen des elektrischen Antriebs 3 verbunden. Die an den Knotenpunkten der Halbbrücken 11 - 13 und somit an den Phasenanschlüssen U, V, W bereitgestellten Ausgangsspannungen verursachen somit im Strompfad zwischen den Knotenpunkten der Halbbrücken 11 - 13 und den Phasenanschlüssen U, V, W die Phasenströme $I_U$, $I_V$, $I_W$.

Zur Messung der Ströme $I_U$, $I_V$, $I_W$ ist in dem Strompfad zwischen den Knotenpunkten, an denen jeweils zwei Halbleiterschalter S1-S6 miteinander verbunden sind und einem Phasenanschluss U, V, W ein Stromdetektor I1-I3 angeordnet. Auf diese Weise kann ein erster Stromdetektor I1 einen Strom zwischen erster Halbbrücke 11 und dem ersten Phasenanschluss U detektieren. In analoger Weise können auch die weiteren Stromdetektoren I2 und I3 die entsprechenden Ströme zwischen den Halbbrücken 12 bzw. 13 und den weiteren Phasenanschlüssen V, W detektieren. Die Stromdetektoren I1 bis I3 stellen dabei an der Steuervorrichtung 10 jeweils ein Detektorsignal bereit, das zu dem jeweils detektierten Strom korrespondiert.

Für den Fall eines mehrphasigen Pulswechselrichters 1 kann dabei an einem der Phasenanschlüsse U, V, W der Stromdetektor I1, I2 oder I3 entfallen. Da die Summe aller Phasenströme $I_U$, $I_V$, $I_W$ stets Null ergibt, kann einer der Phasenströme $I_U$, $I_V$, $I_W$ bei Kenntnis aller übrigen Phasenströme errechnet werden. Somit ist es zum Beispiel bei einem dreiphasigen Pulswechselrichter 1 ausreichend, nur zwei Phasenströme $I_U$, $I_V$, $I_W$ mittels Stromdetektoren I1, I2, I3 zu erfassen und den dritten Phasenstrom $I_U$, $I_V$, $I_W$ unter Verwendung der beiden erfassten Phasenströme $I_U$, $I_V$, $I_W$ zu errechnen. Alternativ können auch alle Phasenströme $I_U$, $I_V$, $I_W$ erfasst werden und daraufhin eine Plausibilitätskontrolle durchgeführt werden, um sicherzustellen, dass alle erfassten Phasenströme $I_U$, $I_V$, $I_W$ korrekt sind. Ergibt die Plausibilitätskontrolle dabei, dass die Summe der erfassten Phasenströme nicht Null ergibt, oder signifikant von Null abweicht, so kann in diesem Fall auf eine Fehlfunktion geschlossen werden und die Unterdrückung der Ansteuersignale an den Halbleiterschaltern S1-S6 kann in diesem Fall ausgesetzt werden, um die Betriebssicherheit zu steigern.

Die Steuervorrichtung 10 steuert basierend auf einem vorgegebenen Sollwert und gegebenenfalls auch auf Messwerten, wie zum Beispiel der Drehzahl des elektrischen Antriebs 3, die Halbleiterschalter S1 bis S6 an. Basierend auf dem Muster der Ansteuerung der Halbleiterschalter S1 bis S6 durch die Steuervorrichtung 10 erzeugt der Pulswechselrichter 1 an den Phasenanschlüssen U, V, W, die mit den Phasenanschlüssen des elektrischen Antriebs 3 verbunden sind, eine geeignete pulsweitenmodulierte Phasenspannung (Pulsweitenmodulation = PWM). Hierzu müssen die von der Steuervorrichtung 10 zunächst als digitale Signale vorliegenden Ansteuerpulse mittels hier nicht dargestellter Treiberstufen verstärkt und angepasst werden, so dass die Steuersignale dazu geeignet sind, die Halbleiterschalter S1 bis S6 an ihren Steuereingängen anzusteuern.

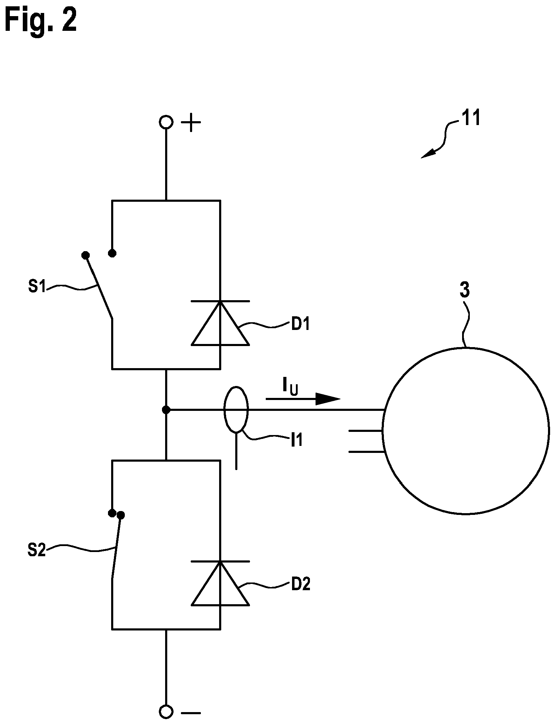

Figur 2 zeigt eine schematische Darstellung einer Halbbrücke 11 gemäß einer Ausführungsform. Bei der dabei dargestellten Halbbrücke kann es sich beispielsweise um die erste Halbbrücke 11 des Pulswechselrichters 1 aus Figur 1 handeln. Zur besseren Veranschaulichung der Schaltzustände sind in diesem Fall die beiden Halbleiterschalter S1 und S2 als konventionelle Schalter dargestellt. Dabei ist der obere Schalter S1 (High-Side-Schalter), der mit dem positiven Potenzial der Versorgungsspannung verbunden ist, geöffnet. Der untere Halbleiterschalter S2 (Low-Side-Schalter), der mit dem negativen Potenzial der Versorgungsspannung verbunden ist, ist hier geschlossen. Fließt der Strom $I_U$ in dem Knotenpunkt zwischen den beiden Halbleiterschaltern S1 und S2 dabei in Richtung des elektrischen Antriebs 3, so kann in diesem Fall der Strom durch die untere Freilaufdiode D2 fließen. Da der Strom durch die parallel zu dem unteren Halbleiterschalter S2 angeordnete Freilaufdiode D2 fließen kann, ist es in diesem Fall nicht erforderlich, dass der untere Halbleiterschalter S2 angesteuert und somit geschlossen wird. Die vorausgegangenen Ausführungen für den unteren Halbleiterschalter S2 der ersten Halbbrücke 11 gelten darüber hinaus analog auch für die weiteren Halbbrücken 12 und 13.

Ferner kann bei einem Strom $I_U$ von dem elektrischen Antrieb 3 in Richtung des Pulswechselrichters 1 der Strom $I_U$ auch dann über die Freilaufdiode D1 der Halbbrücke 11 fließen, wenn der obere Halbleiterschalter S1 der Halbbrücke 11 geschlossen ist und der untere Halbleiterschalter S2 geöffnet ist. Somit kann bei einem Stromfluss $I_U$ von dem elektrischen Antrieb 3 in Richtung des Pulswechselrichters 1 eine Ansteuerung des oberen Halbleiterschalters S1 entfallen. Bei Kenntnis des Phasenstroms $I_U$, und insbesondere bei Kenntnis des Vorzeichens dieses Phasenstroms $I_U$, also der Richtung, in die der Phasenstrom $I_U$ fließt, kann somit ohne weitere Sensorik bestimmt werden, ob der Strom durch die Freilaufdioden D1 oder D2 fließt, oder ob eine aktive Ansteuerung des parallel zu der jeweiligen Freilaufdiode D1, D2 angeordneten Halbleiterschalters S1 bzw. S2 erforderlich ist. Wie durch die vorausgegangenen Anmerkungen dargelegt wurde, kann bei einem Phasenstrom $I_U$ von der Halbbrücke 11 zu dem elektrischen Antrieb 3 eine Ansteuerung des unteren Halbleiterschalters S2 (Low-Side-Schalters) entfallen. Bei einem Phasenstrom $I_U$ von dem elektrischen Antrieb 3 in Richtung der Halbbrücke 11 kann eine Ansteuerung des oberen Halbleiterschalters S1 (High-Side-Schalters) entfallen.

Um ein Ansteuern des jeweiligen Halbleiterschalters S1 bis S6 zu vermeiden, wenn der Strom ohnehin durch die parallel dazu angeordnete Freilaufdiode D1 bis D6 fließt, wertet die Steuervorrichtung 10 die von den Detektorvorrichtungen I1 bis I3 generierten Detektorsignale und insbesondere die Richtung der Ströme $I_U$, $I_V$, $I_W$ an den Phasenanschlüssen U, V, W aus. Ergibt sich aus dieser Auswertung ein Stromfluss durch eine der Freilaufdioden D1 bis D6, so kann in diesem Fall das Ansteuern des parallel dazu angeordneten Halbleiterschalters S1 bis S6 entfallen, ohne dass hierzu der Strom durch eine der Dioden D1 - D6 unmittelbar gemessen werden muss. Auf diese Weise lassen sich maximal bis zu 50 % der Schaltvorgängen in den jeweiligen Halbleiterschaltern gegenüber einer konventionellen Ansteuerung einsparen.

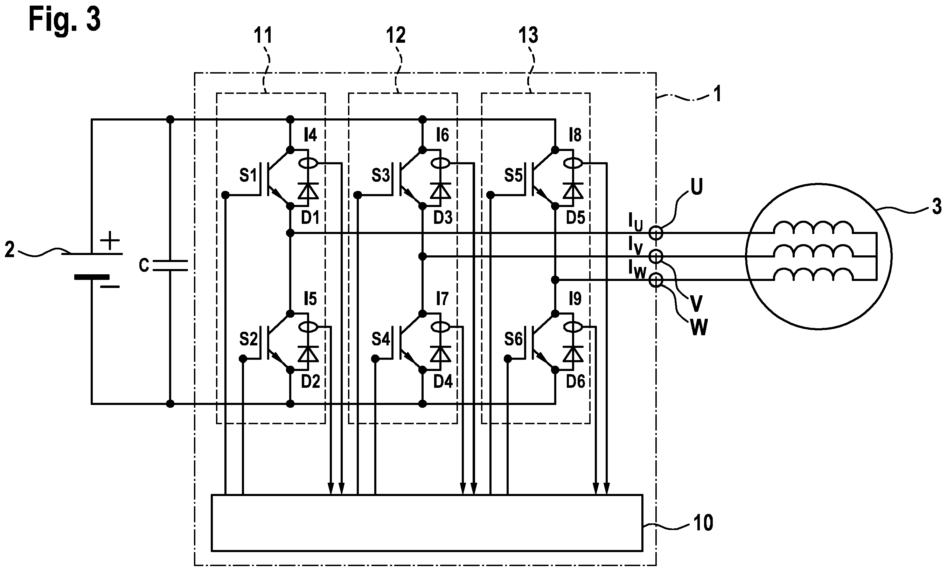

Figur 3 zeigt eine weitere Ausführungsform eines Pulswechselrichters 1. der Aufbau entspricht dabei im Wesentlichen dem Aufbau des Pulswechselrichters aus Figur 1. Darüber hinaus umfasst der hier dargestellte Pulswechselrichter 1 anstelle der drei Stromdetektoren I1, I2 und I3 die sechs Stromdetektoren I4 bis I9. Dabei ist jeweils ein Stromdetektor I4-I9 in dem Strompfad einer der Freilaufdioden D1-D6 angeordnet. Auf diese Weise können durch die Stromdetektoren I4-I9 jeweils direkt die Ströme durch die entsprechenden Freilaufdioden D1-D6 erfasst werden. Aus den von den Detektorsignalen dieser Stromdetektoren I4-I9 in den Strompfaden der Freilaufdioden D1-D6 kann somit unmittelbar auf einen Stromfluss durch die Dioden D1-D6 geschlossen werden. Daraufhin kann in dem Fall, in den ein Strom durch die jeweilige Freilaufdiode D1-D6 fließt, eine Ansteuerung des parallel dazu angeordneten Halbleiterschalters S1-S6 unterdrückt werden.

Alternativ ist es darüber hinaus auch möglich, anstelle der Stromdetektoren I4-I9 in den Strompfad der Freilaufdioden D1-D6 auch die Ströme in den Strompfaden der Halbleiterschalter S1-S6 zu überwachen (hier nicht dargestellt). Wird dabei bei einem angesteuerten Halbleiterschalter S1-S6 festgestellt, dass kein Strom in dem Strompfad des entsprechenden Halbleiterschalter S1-S6 fließt, so kann darauf geschlossen werden, dass der Strom durch die parallel angeordnete Freilaufdiode D1-D6 fließen muss.

Zur weiteren Steigerung der Betriebssicherheit kann die Unterdrückung der Ansteuerung eines Halbleiterschalters S1 bis S6 auch nur dann erfolgen, wenn der Betrag des detektierten Stroms $I_U$, $I_V$, $I_W$ an den Phasenanschlüssen U, V, W einen vorgegebenen Schwellwert überschreitet. Die Entscheidung, ob bei einem Überschreiten des Schwellwerts des Stroms $I_U$, $I_V$, $I_W$ die Steuersignale für den oberen (High-Side) Halbleiterschalter (S1, S3, S5) oder für den unteren (Low-Side) Halbleiterschalter (S2, S4, S6) unterdrückt werden sollen, erflogt dabei unter Berücksichtigung der Stromrichtung, also dem Vorzeichen des detektieren Stroms $I_U$, $I_V$, $I_W$. Liegt der Betrag des Stroms $I_U$, $I_V$, $I_W$ an den Phasenanschlüssen U, V, W dagegen unterhalb dieses vorgegebenen Schwellwerts, so wird in diesem Fall der jeweilige Halbleiterschalter S1 bis S6 angesteuert. Entsprechend kann auch bei einer Stromdetektion durch die Stromdetektoren I4-I9 in den Strompfaden der Freilaufdioden D1-D6 gemäß Figur 3 eine Unterdrückung der Ansteuerung nur dann erfolgen, wenn die detektierten Ströme einen vorbestimmten Schwellwert überschreiten.

Auf diese Weise ist es möglich, dass die Steuervorrichtung 10 zunächst alle Steuersignale zur Ansteuerung der jeweiligen Halbleiterschalter S1 bis S6 generiert, wie es auch bisher bei konventionellen Pulswechselrichtern der Fall ist. Wird dabei jedoch erkannt, dass der jeweilige Halbleiterschalter S1 bis S6, der gerade angesteuert werden soll, nicht zwingend geschlossen werden muss, da der Strom durch eine parallel zu dem Halbleiterschalter S1-S6 vorhandene Freilaufdiode D1 bis D6 fließen wird, so wird das durch die Steuervorrichtung 10 generierte Steuersignal unterdrückt und nicht an den Steueranschluss des jeweiligen Halbleiterschalters S1 bis S6 angelegt. Der jeweilige Halbleiterschalter S1 bis S6 bleibt somit geöffnet.

Die Unterdrückung des durch die Steuervorrichtung 10 generierten Ansteuersignals für die Steueranschlüsse der Halbleiterschalter S1 bis S6 kann dabei als Hardwarelösung oder als Softwarelösung realisiert werden. Bei einer Hardwarelösung umfasst die Steuervorrichtung 10 beispielsweise eine Logikkomponente, die basierend auf den erfassten Ströme $I_U$, $I_V$, $I_W$ an den Phasenanschlüssen U, V, W und insbesondere der Stromrichtungen aufgrund einer logischen Verknüpfung, oder einer ähnlichen Schaltungskonfiguration das innerhalb der Steuervorrichtung 10 generierte Ansteuersignal nicht ausgibt. Somit liegt kein Steuersignal an dem jeweiligen Halbleiterschalter S1 bis S6 an, wenn sich aus der Auswertung der erfassten Ströme $I_U$, $I_V$, $I_W$ an den Phasenanschlüssen U, V, W ergibt, dass der Strom ohnehin durch die parallel zu dem Halbleiterschalter S1-S6 angeordnete Freilaufdiode D1-D6 fließt. Beispielsweise kann dies durch eine Und-Verknüpfung des generierten Steuersignals und des detektierten Stroms, gegebenenfalls mit einer Inversion einzelner Signale, erfolgen. Andere Schaltungsanordnungen zur Unterdrückung von Steuersignalen, die durch die Steuervorrichtung 10 generiert wurden, sind darüber hinaus ebenso möglich. Insbesondere kann der von den jeweiligen Detektorvorrichtungen I1 bis I3 detektierte Strom auch zuvor mit einem vorgegebenen Schwellwert verglichen werden, und das Ergebnis dieses Vergleichs mit einem Schwellwert kann dann für die Weiterverarbeitung herangezogen werden. Analog kann die Unterdrückung der Ansteuersignale für die Halbleiterschalter S1-S6 auch basierend auf den Detektorsignalen von Stromdetektoren I4-I9 in den Strompfaden der Freilaufdioden gemäß Figur 3 erfolgen.

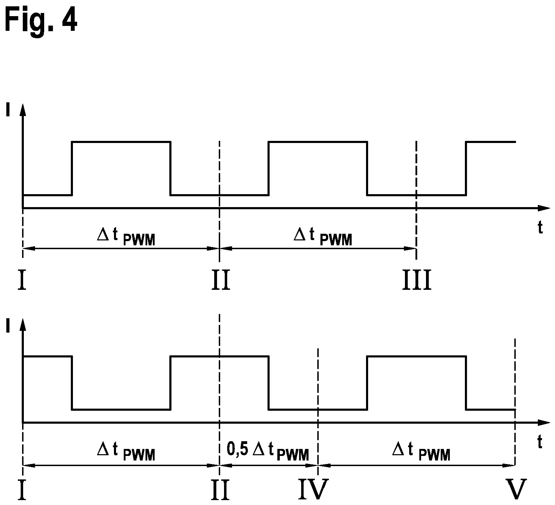

In einer alternativen Ausführungsform kann die Steuervorrichtung 10 die von den Detektorvorrichtungen I1 bis I3 detektierten Phasenströme oder die von den Detektorvorrichtungen I4 bis I9 detektierten Diodenströme auch softwarebasiert auswerten und basierend auf dieser softwarebasierten Prozessierung nur dann ein Steuersignal für die jeweiligen Steueranschlüsse der Halbleiterschalter S1 bis S6 ausgeben, wenn kein Strom durch die entsprechenden Freilaufdioden D1 bis D6 fließt, bzw. der Strom durch die jeweiligen Freilaufdioden D1 bis D6 unterhalb eines vorgegebenen Schwellwerts liegt. Dabei muss bei der Umsetzung der Unterdrückung von Ansteuersignalen für die jeweiligen Halbleiterschalter S1 bis S6 beachtet werden, dass es zwischen der Erfassung der Ströme durch die Detektorvorrichtungen I1 bis I9 und dem Ansteuern der Halbleiterschalter S1 bis S6 zu einer systembedingten Verzugszeit kommt, da die Verarbeitung der Signale von der Detektorvorrichtung I1 bis I9 mittels Software eine entsprechende Rechenzeit erfordert. Daher können durch die Steuervorrichtung 10 nach dem Erfassen der Ströme am Anfang eines PWM-Rasters $\Delta t_{PWM}$ nur die Ein- und Ausschaltzeiten des darauffolgenden Rasters berechnet werden. Die Ansteuerung eines Halbleiterschalters S1-S6 kann dabei maximal bis zu einem PWM-Raster $\Delta t_{PWM}$ lang sein, wobei die konventionelle Ansteuerung des oberen und des unteren Halbleiterschalters in einer Halbbrücke jeweils wechselseitig erfolgt. Um zu gewährleisten, dass kein Kurzschluss zwischen positivem und negativem Potenzial der Versorgungsspannung durch gleichzeitiges Ansteuern der beiden Halbleiterschalter einer Halbbrücke verursacht wird, wenn die Ansteuerung von dem oberen Halbleiterschalter zu dem unteren (oder umgekehrt) wechselt, kann zusätzlich noch eine Schutzzeit vorgesehen werden, in der kein Halbleiterschalter einer Halbbrücke angesteuert wird. Dieser zeitliche Zusammenhang ist beispielsweise in Figur 4 veranschaulicht.

In dem oberen Diagramm in Figur 4 ist dabei ein Ansteuersignal für den oberen Halbleiterschalter, beispielsweise den Halbleiterschalter S1 der ersten Halbbrücke 11 dargestellt. Ein logisches high entspricht dabei einer Ansteuerung und ein logisches low entspricht einem deaktivierten Schalter. Ein Ansteuersignal, das innerhalb eines PWM-Rasters berechnet wird, wirkt dabei erst in dem darauffolgenden PWM-Raster. Die für die Ansteuerung während eines PWM-Rasters (z.B. zwischen II und III) zugrundeliegenden Stromwerte stammen dabei vom Beginn eines vorherigen PWM-Rasters (z.B. zum Zeitpunkt I). Basierend auf diesen vorherigen Stromwerten erfolgt eine Berechnung oder Prädiktion von Strömen für die Ausgabe oder Unterdrückung von Ansteuersignalen für die Halbleiterschaltelemente Die Vorhersage für einen unteren Halbleiterschalter, beispielsweise den Halbleiterschalter S2 der ersten Halbbrücke 11 erfolgt dabei gegenüber der Vorhersage des oberen Halbleiterschalters um ein halbes PWM-Raster ($0{,}5\,\Delta t_{PWM}$) versetzt, wie dies in dem unteren Diagramm der Figur 4 zwischen IV und V dargestellt ist.

Soll auf eine Ansteuerung eines Halbleiterschalters S1 bis S6 verzichtet werden, so darf sich in diesem Fall das Vorzeichen des Phasenstroms während der gesamten potentiellen Ansteuerdauer des jeweiligen Halbleiterschalters S1 bis S6 nicht ändern. Hierzu ist eine besonders zuverlässige Vorhersage der Phasenströme erforderlich. Die Phasenströme nehmen dabei in der Regel einen zumindest annähernd sinusförmigen Verlauf an. Für einen dreiphasigen elektrischen Antrieb lassen sich die Phasenströme $I_U$, $I_U$, $I_W$ der drei Phasen U, V und W als Stromzeiger mit den Koordinaten $I_\alpha$ und $I_\beta$ in einem $\alpha$-$\beta$-Koordinatensystem mittels Clarke-Transformation darstellen:

$$\begin{bmatrix} I_\alpha \\ I_\beta \end{bmatrix} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} I_U \\ I_V \\ I_W \end{bmatrix}$$

Dabei rotiert der Stromzeiger mit einer Winkelgeschwindigkeit $\omega$. Wird darüber hinaus angenommen, dass die Länge des Stromzeigers und die Winkelgeschwindigkeit für kurze Zeiten konstant sind, so lassen sich die $\alpha$-$\beta$-Koordinaten des vorhergesagten Stromzeigers als $I_{\alpha,pred}$ und $I_{\beta,pred}$ bestimmen:

$$\begin{bmatrix} I_{\alpha,pred} \\ I_{\beta,pred} \end{bmatrix} = \begin{bmatrix} cos(\omega t) & -sin(\omega t) \\ sin(\omega t) & cos(\omega t) \end{bmatrix} \begin{bmatrix} I_\alpha \\ I_\beta \end{bmatrix}$$

Um die Genauigkeit dieser Vorhersage noch zu erhöhen, kann zusätzlich eine Änderung der Amplitude und der Phasenlage des Stromzeigers in einem rotorflussfesten Koordinatensystem (d-q-Koordinatensystem) berücksichtigt werden. Dies kann mit Hilfe eines geeigneten Maschinenmodells unter Berücksichtigung der Klemmenspannung erfolgen. Für eine anschließende Bestimmung des Vorzeichens der jeweiligen Phasenströme $I_{U,pred}$, $I_{V,pred}$ und $I_{W,pred}$ kann beispielsweise eine inverse Clarke-Transformation verwendet werden:

$$\begin{bmatrix} I_{U,pred} \\ I_{V,pred} \\ I_{W,pred} \end{bmatrix} = \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} I_{\alpha,pred} \\ I_{\beta,pred} \end{bmatrix}$$

Basierend auf den so berechneten Phasenströmen $I_{U,pred}$, $I_{V,pred}$ und $I_{W,pred}$ und deren Vorzeichen kann dabei eine Unterdrückung der Ansteuerung der jeweiligen Halbleiterschalter S1 bis S6 erfolgen, wenn basierend auf der berechneten Vorhersage der Phasenströme der Strom ohnehin durch die parallel zu dem jeweiligen Halbleiterschalter S1 bis S6 angeordnete Freilaufdiode D1 bis D6 fließen wird.

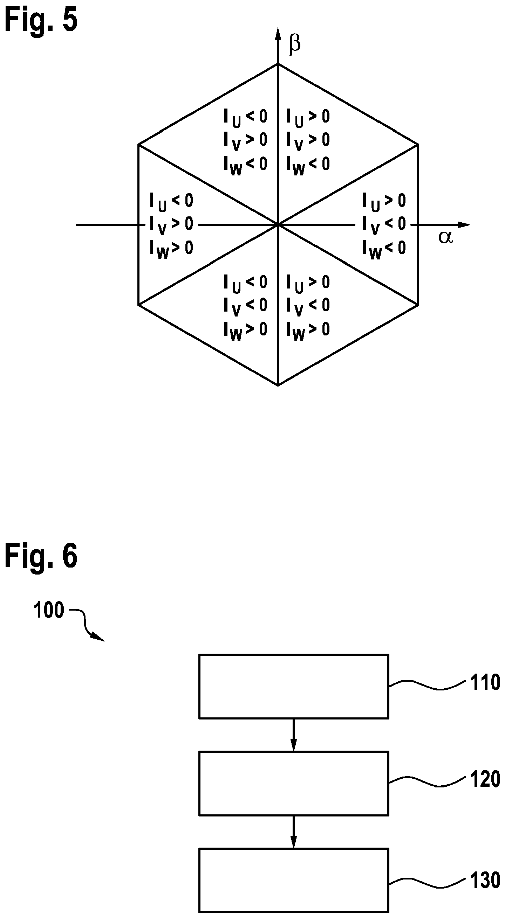

Alternativ kann auch eine Analyse des Sektors erfolgen, in dem sich der Stromzeiger befindet. Wie zum Beispiel in Figur 5 dargestellt, sind dabei in Sektoren von jeweils 60° die Vorzeichen der drei Phasenströme $I_U$, $I_V$ und $I_W$ konstant. Von einem Sektor zum nächsten ändert sich dabei genau ein Vorzeichen. Basierend auf den so vorhergesagten Vorzeichen der jeweiligen Phasenströme kann die Steuervorrichtung 10 bestimmen, ob der Strom durch die jeweilige Freilaufdiode D1 bis D6 fließen wird, oder ob ein aktives Ansteuern des entsprechenden Halbleiterschalters S1 bis S6 erforderlich ist.

Für eine Erhöhung der Robustheit ist es darüber hinaus vorteilhaft, wenn zusätzliche Sicherheitsbereiche definiert werden, so dass die Steuervorrichtung 10 die Ansteuerung eines Halbleiterschalters S1 bis S6 nicht unmittelbar dann unterdrückt, wenn aufgrund der Bestimmung des Vorzeichens in einem Phasenstrom $I_U$, $I_V$, $I_W$ der Strom durch die Freilaufdiode D1-D6 fließen würde. Vielmehr wird ein zusätzlicher Sicherheitsbereich vorgegeben, den der Stromzeiger überschreiten muss, bevor eine Unterdrückung der Ansteuersignale durch die Steuervorrichtung 10 erfolgt. Auf diese Weise können Störeffekte wie Stromrippel, nicht-sinusförmige Phasenströme oder dynamische Änderungen kompensiert werden. Im Gegenzug sinkt hierdurch die Anzahl der unterdrückten Schaltvorgänge.

Figur 6 zeigt eine schematische Darstellung eines Ablaufdiagramms, wie es einem Verfahren 100 zum Betreiben eines Stromrichters mit einem Halbleiterschalter S1-S6 zugrunde liegt. Wie bereits oben ausgeführt wurde, umfasst der Halbleiterschalter S1-S6 dabei neben den beiden stromführenden Anschlüssen einen Steueranschluss. Parallel zu den beiden stromführenden Anschlüssen ist eine Diode angeordnet. In Schritt 110 werden dabei zunächst Steuersignale zum Ansteuern des Halbleiterschalters S1 bis S6 generiert. In Schritt 120 wird ein Strom innerhalb des Pulswechselrichters detektiert. Beispielsweise kann es sich bei diesem Strom um einen Strom durch eine der Freilaufdioden D1-D6 oder um einen sich an dem Phasenanschluss U, V, W einstellenden Phasenstrom handeln. Daraufhin werden in Schritt 130 die generierten Steuersignale an dem Steueranschluss des Halbleiterschalters S1-S6 in Abhängigkeit von dem in Schritt 120 detektierten Strom modifiziert. Insbesondere werden in Schritt 130 nur dann die Steuersignale an dem Steueranschluss des Halbleiterschalters S1-S6 bereitgestellt, wenn sich entsprechend des in dem Schritt 120 detektierten Stroms ergibt, dass kein Strom durch die Diode D1-D6 fließt. Insbesondere werden die Steuersignale nur dann an dem Steueranschluss bereitgestellt, wenn der detektierte Strom ergibt, dass der Strom durch die Diode D1-D6 einen vorgegebenen Schwellwert unterschreitet.

Zur Bestimmung des Stromflusses durch die Diode D1-D6 kann dabei insbesondere auch eine rechnerische Prädiktion (Vorhersage) des Stromes einer angeschlossenen Last, beispielsweise einem elektrischen Antrieb 3, erfolgen. Insbesondere können hierzu auch bereits zuvor messtechnisch erfasste Stromverläufe herangezogen werden. Die so berechneten Stromverläufe können bereits bei der Erzeugung der Steuersignale für die Ansteuerung der Halbleiterschalter S1-S6 mit einbezogen werden, so dass in diesem Falle erst gar kein Steuersignal zum Ansteuern eines Halbleiterschalters S1-S6 generiert oder bereitgestellt werden muss, wenn bestimmt wurde, dass der Strom durch die parallel zu dem Halbleiterschalter S1-S6 angeordnete Freilaufdiode D1-D6 fließen wird.

Für die Prädiktion der Stromverläufe kann insbesondere eine Transformation der Phasenströme in ein $\alpha$-$\beta$-Koordinatensystem, beispielsweise mittels Clarke-Transformation erfolgen.

Zusammenfassend betrifft die vorliegende Erfindung einen Pulswechselrichter mit einem oder mehreren Halbleiterschaltern und parallel zu jedem Halbleiterschalter angeordneten Freilaufdioden. Dabei werden die Halbleiterschalter nur dann angesteuert, wenn der Strom nicht durch eine parallel zu dem Halbleiterschalter angeordnete Freilaufdiode fließt. Auf diese Weise kann die Anzahl der Ansteuervorgänge des Halbleiterschalters reduziert werden. Die verringerte Anzahl von Ansteuervorgängen für die Halbleiterschalter führt zu geringeren Leistungsverlusten und einer erhöhten Lebensdauer des Gesamtsystems.

**Patentansprüche**

1. Pulswechselrichter (1) zum Bereitstellen einer pulsweitenmodulierten Ausgangsspannung an einem Phasenanschluss (U, V, W), mit:

    einem Halbleiterschalter (S1-S6), der einen Eingangsanschluss, einen Ausgangsanschluss und einen Steueranschluss umfasst;
    einer Diode (D1-D6), die parallel zu dem Halbleiterschalter (S1-S6) zwischen dem Eingangsanschluss und dem Ausgangsanschluss des Halbleiterschalters (S1-S6) angeordnet ist, wobei die pulsweitenmodulierte Ausgangsspannung an einem Knotenpunkt bereitgestellt wird, an dem die Diode (D1-D6) und der Eingangsanschluss oder Ausgangsanschluss des Halbleiterschalters (S1-S6) miteinander verbunden sind;
    einem Stromdetektor (I1-I9), der dazu ausgelegt ist, einen Strom in dem Pulswechselrichter (1) zu erfassen,
    wobei der Stromdetektor (I1-I9) dazu ausgelegt ist, einen Strom an dem Phasenanschluss (U, V, W) zu erfassen; und
    einer Steuervorrichtung (10), die dazu ausgelegt ist, Steuersignale zum Ansteuern des Halbleiterschalters (S1-S6) zu generieren und an dem Steueranschluss des Halbleiterschalters (S1-S6) bereitzustellen, wobei die Steuervorrichtung (10) ferner dazu ausgelegt ist, ein generiertes Steuersignal in Abhängigkeit von dem durch den Stromdetektor (I1-I9) erfassten Strom an dem Steueranschluss des Halbleiterschalters (S1-S6) zu unterdrücken,
**dadurch gekennzeichnet, dass**
die Steuervorrichtung (10) ferner dazu ausgelegt ist, einen Stromverlauf eines Phasenstroms in dem Pulswechselrichter (1), unter Verwendung des detektierten Stroms, zu berechnen und die generierten Steuersignale in Abhängigkeit von dem berechneten Stromverlauf an dem Steueranschluss des Halbleiterschalters (S1-S6) zu unterdrücken, wenn basierend auf der berechneten Vorhersage des Phasenstroms der Strom ohnehin durch die parallel zu dem jeweiligen Halbleiterschalter (S1-S6) angeordnete Freilaufdiode (D1-D6) fließen wird.

2. Pulswechselrichter (1) nach Anspruch 1, wobei die Steuervorrichtung (10) dazu ausgebildet ist, das generierte Steuersignal an dem Steueranschluss des Halbleiterschalters (S1-S6) zu unterdrücken, wenn ein Strom in einer vorbestimmten Richtung durch den Stromdetektor (I1-I3) erfasst worden ist.

3. Pulswechselrichter (1) nach einem der Ansprüche 1 bis 2, wobei die Steuervorrichtung (10) dazu ausgebildet ist, das generierte Steuersignal nur dann an dem Steueranschluss des Halbleiterschalters (S1-S6) zu unterdrücken, wenn der Betrag des durch den Stromdetektor (I1-I9) erfassten Stroms größer ist als ein vorbestimmter Schwellwert.

4. Pulswechselrichter (1) nach einem der Ansprüche 1 bis 3, wobei der Halbleiterschalter (S1-S6) einen bipolaren Transistor mit isolierter Gateelektrode, IGBT, umfasst.

5. Pulswechselrichter (1) nach einem der Ansprüche 1 bis 4, mit einer Halbbrücke (11, 12, 13), die einen ersten Halbleiterschalter (S1, S3, S5), eine erste Diode (D1, D3, D5), einen zweiten Halbleiterschalter (S2, S4, S6) und eine zweite Diode (D2, D4, D6) umfasst, wobei der erste Halbleiterschalter (S1, S3, S5) zwischen dem positiven Potenzial einer Versorgungsspannung und einem Knotenpunkt angeordnet ist, der zweiten Halbleiterschalter (S2, S4, S6) zwischen dem Knotenpunkt und dem negativen Potenzial der Versorgungsspannung angeordnet ist, die erste Diode (D1, D3, D5) zwischen dem positiven Potenzial der Versorgungsspannung und dem Knotenpunkt angeordnet ist und die zweite Diode (D2, D4, D6) zwischen dem Knotenpunkt und dem negativen Potenzial der Versorgungsspannung angeordnet ist, und wobei der Phasenanschluss (U,V,W) mit dem Kontenpunkt verbunden ist.

6. Verfahren (100) zum Betreiben eines Pulswechselrichters (1) mit einem Halbleiterschalter (S1-S6), der einen Eingangsanschluss, einen Ausgangsanschluss und einen Steueranschluss umfasst und mit einer Diode (D1-D6), die parallel zu dem Halbleiterschalter (S1-S6) zwischen dem Eingangsanschluss und dem Ausgangsanschluss des Halbleiterschalters (S1-S6) angeordnet ist, wobei der Pulswechselrichter an einem Phasenanschluss eine pulsweitenmodulierte Ausgangsspannung bereitstellt, und wobei das Verfahren (100) die folgenden Schritte umfasst:

Generieren (110) von Steuersignalen zum Ansteuern des Halbleiterschalters (S1-S6);
Detektieren (120) eines Stroms innerhalb des Pulswechselrichters (1) an dem Phasenanschluss (U, V, W);
Berechnen eines sich an dem Pulswechselrichter (1) einstellenden Phasenstroms,
Unterdrücken (130) der generierten Steuersignale an dem Steueranschluss des Halbleiterschalters (S1-S6) in Abhängigkeit von dem detektierten Strom,
**dadurch gekennzeichnet, dass**
der Schritt zum Berechnen des sich einstellenden Phasenstroms unter Verwendung des detektierten Stroms erfolgt, und dass der Schritt (130) zum Unterdrücken des generierten Steuersignals an dem Steueranschluss des Halbleiterschalters (S1-S6) das Steuersignal unter Verwendung des berechneten Phasenstroms unterdrückt, wenn basierend auf der berechneten Vorhersage des Phasenstroms der Strom ohnehin durch die parallel zu dem jeweiligen Halbleiterschalter (S1-S6) angeordnete Freilaufdiode (D1-D6) fließen wird.

7. Verfahren (100) nach Anspruch 6, wobei der Schritt (130) zum Unterdrücken des generierten Steuersignals an dem Steueranschluss des Halbleiterschalters (S1-S6) das Steuersignal unterdrückt, wenn in dem Schritt (120) zum Detektieren eines Stroms innerhalb des Pulswechselrichters (1) ein Strom in einer vorbestimmten Richtung detektiert worden ist.

8. Verfahren (100) nach Anspruch 6 oder 7, wobei der Schritt (130) zum Unterdrücken des generierten Steuersignals an dem Steueranschluss des Halbleiterschalters (S1-S6) das Steuersignal unterdrückt, wenn der Betrag des detektierten Stroms größer ist als ein vorbestimmter Schwellwert.

9. Verfahren (100) nach Anspruch 6-8, wobei der Schritt (130) zum Berechnen des sich einstellenden Stroms den Strom unter Verwendung einer Clarke-Transformation berechnet.

**Claims**

1. Pulse-controlled inverter (1) for providing a pulse-width modulated output voltage at a phase terminal (U, V, W), comprising:

a semiconductor switch (S1-S6) which includes an input terminal, an output terminal, and a control terminal;
a diode (D1-D6) which is arranged in parallel to the semiconductor switch (S1-S6), between the input terminal and the output terminal of the semiconductor switch (S1-S6), wherein the pulse-width modulated output voltage is provided at a node, at which the diode (D1-D6) and the input terminal or output terminal of the semiconductor switch (S1-S6) are connected to each other;
a current detector (I1-I9) which is designed for detecting a current in the pulse-controlled inverter (1);
wherein the current detector (I1-I9) is designed for detecting a current at the phase terminal (U, V, W); and
a control device (10) which is designed for generating control signals for triggering the semiconductor switch (S1-S6) and providing said signals at the control terminal of the semiconductor switch (S1-S6), wherein the control device (10) is further designed for suppressing a generated control signal in accordance with the current at the control terminal of the semiconductor switch (S1-S6), which is detected by the current detector (I1-I9),
**characterized in that**
the control device (10) is further designed for calculating a phase current progression in the pulse-controlled inverter (1) on the basis of the detected current, and suppressing the generated control signals in accordance with the calculated current progression at the control terminal of the semiconductor switch (S1-S6) if, on the basis of the calculated prediction of the phase current, the current will still flow anyway through the freewheeling diode (D1-D6) arranged in parallel to the respective semiconductor switch (S1-S6).

2. Pulse-controlled inverter (1) according to Claim 1, wherein the control device (10) is designed for suppressing the generated control signal at the control terminal of the semiconductor switch (S1-S6) if a current in a predetermined direction through the current detector (I1-I3) has been detected.

3. Pulse-controlled inverter (1) according to one of Claims 1 to 2, wherein the control device (10) is designed for suppressing the generated control signal at the control terminal of the semiconductor switch (S1-S6) only if the absolute value of the current detected by the current detector (I1-I9) is greater than a predetermined threshold value.

4. Pulse-controlled inverter (1) according to one of Claims 1 to 3, wherein the semiconductor switch (S1-S6) includes a bipolar transistor having an insulated gate electrode, IGBT.

5. Pulse-controlled inverter (1) according to one of Claims 1 to 4, comprising a half-bridge (11, 12, 13) which includes a first semiconductor switch (S1, S3, S5), a first diode (D1, D3, D5), a second semiconductor switch (S2, S4, S6), and a second diode (D2, D4, D6), wherein the first semiconductor switch (S1, S3, S5) is arranged between the positive potential of a supply voltage and a node, the second semiconductor switch (S2, S4, S6) is arranged between the node and the negative potential of the supply voltage, the first diode (D1, D3, D5) is arranged between the positive potential of the supply voltage and the node, and the second diode (D2, D4, D6) is arranged between the node and the negative potential of the supply voltage, and wherein the phase terminal (U, V, W) is connected to the node.

6. Method (100) for operating a pulse-controlled inverter (1) comprising a semiconductor switch (S1-S6) which includes an input terminal, an output terminal, and a control terminal, and comprising a diode (D1-D6) which is arranged in parallel to the semiconductor switch (S1-S6), between the input terminal and the output terminal of the semiconductor switch (S1-S6), wherein the pulse-controlled inverter provides a pulse-width modulated output voltage at a phase terminal, and wherein the method (100) includes the following steps:

generating (110) control signals for triggering the semiconductor switch (S1-S6);
detecting (120) a current within the pulse-controlled inverter (1) at the phase terminal (U, V, W);
calculating a phase current which occurs at the pulse-controlled inverter (1),
suppressing (130) the generated control signals at the control terminal of the semiconductor switch (S1-S6) in accordance with the detected current,
**characterized in that**
the step of calculating the resultant phase current takes place on the basis of the detected current, and **in that** the step (130) of suppressing the generated control signal at the control terminal of the semiconductor switch (S1-S6) suppresses the control signal on the basis of the calculated phase current if, on the basis of the calculated prediction of the phase current, the current will still flow anyway through the freewheeling diode (D1-D6) arranged in parallel to the respective semiconductor switch (S1-S6).

7. Method (100) according to Claim 6, wherein the step (130) of suppressing the generated control signal at the control terminal of the semiconductor switch (S1-S6) suppresses the control signal if a current in a predetermined direction has been detected in the step (120) of detecting a current within the pulse-controlled inverter (1).

8. Method (100) according to Claim 6 or 7, wherein the step (130) of suppressing the generated control signal at the control terminal of the semiconductor switch (S1-S6) suppresses the control signal if the absolute value of the detected current is greater than a predetermined threshold value.

9. Method (100) according to Claim 6-8, wherein the step (130) of calculating the resultant current calculates the current on the basis of a Clarke transformation.

**Revendications**

1. Onduleur à impulsions (1) destiné à délivrer une tension de sortie modulée en largeur d'impulsions au niveau d'une borne de phase (U, V, W), comprenant :

un commutateur semiconducteur (S1-S6), qui comporte une borne d'entrée, une borne de sortie et une borne de commande ;
une diode (D1-D6), qui est montée en parallèle avec le commutateur semiconducteur (S1-S6) entre la borne d'entrée et la borne de sortie du commutateur semiconducteur (S1-S6), la tension de sortie modulée en largeur d'impulsions étant délivrée au niveau d'un point nodal auquel la diode (D1-D6) et la borne d'entrée ou la borne de sortie du commutateur semiconducteur (S1-S6) sont reliées ensemble ;
un détecteur de courant (I1-I9), qui est conçu pour détecter un courant à travers l'onduleur à impulsions (1),
le détecteur de courant (I1-I9) étant conçu pour détecter un courant au niveau de la borne de phase (U, V, W) ; et un dispositif de commande (10), qui est conçu pour générer des signaux de commande destinés à attaquer le commutateur semiconducteur (S1-S6) et les délivrer à la borne de commande du commutateur semiconducteur (S1-S6), le dispositif de commande (10) étant en outre conçu pour supprimer un signal de commande généré à la borne de commande du commutateur semiconducteur (S1-S6) en fonction du courant détecté par le détecteur de courant (I1-I9),

**caractérisé en ce que**

le dispositif de commande (10) est en outre conçu pour calculer une courbe de courant d'un courant de phase dans l'onduleur à impulsions (1) en utilisant le courant détecté et supprimer les signaux de commande générés à la borne de commande du commutateur semiconducteur (S1-S6) en fonction de la courbe de courant calculée si, en se basant sur la prévision calculée du courant de phase, le courant circulera de toute façon à travers la diode de roue libre (D1-D6) montée en parallèle avec le commutateur semiconducteur (S1-S6) respectif.

2. Onduleur à impulsions (1) selon la revendication 1, le dispositif de commande (10) étant conçu pour supprimer le signal de commande généré à la borne de commande du commutateur semiconducteur (S1-S6) lorsqu'un courant dans une direction prédéterminée a été détecté par le détecteur de courant (I1-I3).

3. Onduleur à impulsions (1) selon l'une des revendications 1 et 2, le dispositif de commande (10) étant conçu pour ne supprimer le signal de commande généré à la borne de commande du commutateur semiconducteur (S1-S6) que lorsque la valeur du courant détecté par le détecteur de courant (I1-I9) est supérieure à une valeur de seuil prédéterminée.

4. Onduleur à impulsions (1) selon l'une des revendications 1 à 3, le commutateur semiconducteur (S1-S6) comprenant un transistor bipolaire à gâchette isolée, IGBT.

5. Onduleur à impulsions (1) selon l'une des revendications 1 à 4, comprenant un demi-pont (11, 12, 13), qui comporte un premier commutateur semiconducteur (S1, S3, S5), une première diode (D1, D3, D5), un deuxième commutateur semiconducteur (S2, S4, S6), une deuxième diode (D2, D4, D6), le premier commutateur semiconducteur (S1, S3, S5) étant disposé entre le potentiel positif d'une tension d'alimentation et un point nodal, le deuxième commutateur semiconducteur (S2, S4, S6) étant disposé entre le point nodal et le potentiel négatif de la tension d'alimentation, la première diode (D1, D3, D5) étant disposée entre le potentiel positif de la tension d'alimentation et le point nodal et la deuxième diode (D2, D4, D6) étant disposée entre le point nodal et le potentiel négatif de la tension d'alimentation, et la borne de phase (U, V, W) étant reliée au point nodal.

6. Procédé (100) pour faire fonctionner un onduleur à impulsions (1) comprenant un commutateur semiconducteur (S1-S6), qui comporte une borne d'entrée, une borne de sortie et une borne de commande, et comprenant une diode (D1-D6), qui est montée en parallèle avec le commutateur semiconducteur (S1-S6) entre la borne d'entrée et la borne de sortie du commutateur semiconducteur (S1-S6), l'onduleur à impulsions le signal de commande en utilisant délivrant une tension de sortie modulée en largeur d'impulsions au niveau d'une borne de phase et le procédé (100) comprenant les étapes suivantes :

génération (110) de signaux de commande destinés à attaquer le commutateur semiconducteur (S1-S6) ;
détection (120) d'un courant à l'intérieur de l'onduleur à impulsions (1) au niveau de la borne de phase (U, V, W) ;
calcul d'un courant de phase qui s'établit au niveau de l'onduleur à impulsions (1),
suppression (130) des signaux de commande générés à la borne de commande du commutateur semiconducteur (S1-S6) en fonction du courant détecté,

**caractérisé en ce que**

l'étape de calcul du courant de phase qui s'établit est exécutée en utilisant le courant détecté, et **en ce que** l'étape (130) de suppression du signal de commande générés à la borne de commande du commutateur semiconducteur (S1-S6) supprime le signal de commande en utilisant le courant de phase calculé si, en se basant sur la prévision calculée du courant de phase, le courant circulera de toute façon à travers la diode de roue libre (D1-D6) montée en parallèle avec le commutateur semiconducteur (S1-S6) respectif.

7. Procédé (100) selon la revendication 6, l'étape (130) de suppression du signal de commande généré à la borne de commande du commutateur semiconducteur (S1-S6) supprime le signal de commande si un courant dans une direction prédéterminée a été détecté à l'étape (120) de détection d'un courant à l'intérieur de l'onduleur à impulsions (1).

8. Procédé (100) selon la revendication 6 ou 7, l'étape (130) de suppression du signal de commande généré à la borne de commande du commutateur semiconducteur (S1-S6) supprime le signal de commande si la valeur du courant détecté est supérieure à une valeur de seuil prédéterminée.

9. Procédé (100) selon les revendications 6 à 8, l'étape (130) de calcul du courant qui s'établit calculant le courant en utilisant une transformée de Clarke.

# Fig. 1

# Fig. 2

# Fig. 3

EP 3 219 005 B1

# Fig. 4

# Fig. 5

$I_U < 0$
$I_V > 0$
$I_W < 0$

$I_U > 0$
$I_V > 0$
$I_W < 0$

$I_U < 0$
$I_V > 0$
$I_W > 0$

$I_U > 0$
$I_V < 0$
$I_W < 0$

$I_U < 0$
$I_V < 0$
$I_W > 0$

$I_U > 0$
$I_V < 0$
$I_W > 0$

$\beta$

$\alpha$

# Fig. 6

100

110

120

130

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2001037242 A
- EP 2568560 A1
- JP 2012143075 A
- CN 101252336 A
- US 2009057832 A
- DE 10201705 A1
- DE 10249568 A1
- DE 102005035770 A1
- DE 102009047616 A1